# FASCICULE DE BREVET EUROPEEN

(11) **EP 0 684 072 B1**
(45) Date de publication et mention de la délivrance du brevet: **12.03.2003**
(21) Numéro de dépôt: 95401179.7
(22) Date de dépôt: 22.05.1995
(51) Int. Cl.: B01J 23/10, B01J 23/34, B01J 23/56, B01J 23/76, B01J 35/00, B01J 37/02, C01F 17/00, B01D 53/94, B01J 23/63, B01J 23/83

(54) **Composé dispersible à base d'une terre rare, procédés de preparation de celui-ci et d'une suspension colloidale obtenue à partir de ce composé.**
Dispergierbare Zusammensetzung auf Basis von einem Seltenerdmetall, Verfahren zur deren Herstellung und Verfahren zur Herstellung einer kolloidale Suspension.
Rare earth-based dispersible compound, process for its preparation and for the preparation of a colloidal suspension obtained from it.

(30) Priorité: 27.05.1994 FR 9406448
(43) Date de publication de la demande: 29.11.1995
(73) Titulaire: RHODIA CHIMIE, 92408 Courbevoie Cédex (FR)
(72) Inventeur: Chopin, Thierry, F-95320 Saint-Leu-La-Foret (FR); Touret, Olivier, F-17000 La Rochelle (FR); Vilmin, Gabriel, Princeton, NJ 08540 (US)
(74) Mandataire: Dubruc, Philippe

(56) Documents cités:
- EP-A- 0 208 581
- EP-A- 0 238 367
- EP-A- 0 239 479
- EP-A- 0 433 133
- EP-A- 0 475 490
- EP-A- 0 517 554
- EP-A- 0 521 613
- EP-A- 0 548 434
- FR-A- 2 413 122
- US-A- 4 791 091

## Description

La présente invention concerne un composé dispersible dans l'eau à base d'au moins une terre rare ainsi que son procédé de préparation. L'invention concerne aussi l'obtention d'une suspension colloïdale à partir de ce composé. Le composé et la suspension peuvent être utilisés pour la fabrication de catalyseurs.

On sait que les catalyseurs peuvent se présenter sous la forme d'un support tel qu'un monolithe réfractaire en céramique ou un substrat métallique pourvu d'un revêtement généralement constitué d'un matériau susceptible de former une couche poreuse comme l'alumine, le titane ou la zircone; d'éléments catalytiquement actifs comme les métaux précieux et d'autres éléments comme des oxydes métalliques et plus particulièrement de terres rares, notamment l'oxyde de cérium, ou comme l'oxyde de zirconium qui peuvent exercer une fonction catalytique propre et/ou une fonction de support pour les métaux précieux. Ce revêtement est désigné sous le terme de "wash-coat".

Pour préparer ce revêtement, on est amené à mélanger par exemple avec de l'alumine des suspensions ou des sols des autres éléments métalliques comme l'oxyde de cérium ou de zirconium. La qualité du revêtement préparé dépendra notamment de la qualité du mélange ainsi formé et ce mélange se fera d'autant mieux que l'on disposera de produits facilement dispersibles, c'est à dire capables, lors de leur mise en dispersion dans l'eau de donner des suspensions suffisamment stables et concentrées pour être utilisées à la préparation de tels mélanges.

Il y a donc un besoin important en composés dispersibles utilisables pour la préparation de catalyseurs.

Par ailleurs, il se dégage aujourd'hui dans l'état de l'art une tendance de plus en plus marquée à essayer d'introduire et de mettre en oeuvre dans les compositions catalytiques des éléments non plus sous une forme séparée et non combinée, mais au contraire directement sous la forme de solutions solides. C'est tout particulièrement le cas par exemple pour le cérium et le zirconium. Là encore, il y a un besoin important en produits susceptibles de pouvoir donner des solutions solides.

L'objet principal de l'invention est donc de fournir des composés utilisables à la préparation de catalyseurs et qui présentent une dispersibilité améliorée.

Le document EP-A-433133 décrit des sols de cérium IV à faible caractère acide et qui contiennent des anions d'acides présentant un pKa compris entre 2,5 et 5,0, du type acide acétique par exemple. Toutefois, ces sols présentent, de par leur procédé de préparation, une teneur en ions nitrates importante.

L'objet principal de l'invention est donc de fournir des composés utilisables à la préparation de catalyseurs qui présentent une dispersibilité améliorée et une faible teneur en anions nitrates.

Dans ce but, le procédé selon l'invention, tel que décrit dans la revendication indépendante 6, de préparation d'un composé dispersible à base d'au moins une terre rare, est caractérisé en ce qu'il comprend les étapes suivantes :
- on prépare une solution ou suspension comprenant au moins un acétate ou un chlorure de terre rare;
- on met en contact la solution avec un milieu basique et on maintient le mélange réactionnel ainsi formé à un pH basique;
- on récupère le précipité formé par atomisation ou lyophilisation.

Dans ce même but et selon un autre mode de réalisation, aussi décrit dans la rev. 12, l'invention concerne un procédé de préparation d'un composé à base d'au moins une terre rare et d'au moins un autre élément choisi dans les groupes IVa, VIIa, VIII, Ib, llb, IIIb et IVb de la classification périodique des éléments et qui est caractérisé en ce qu'on prépare un mélange comprenant au moins un acétate ou chlorure de ladite terre rare et au moins un sel ou un sol dudit élément;
- on met en contact le mélange précité avec un milieu basique et on maintient le milieu réactionnel ainsi formé à un pH basique;
- on récupère le précipité formé par atomisation ou lyophilisation.

Par ailleurs, l'invention, tel que défini dans la revendication indépendante 1, concerne un composé à base d'au moins une terre rare et éventuellement d'au moins un autre élément choisi dans les groupes IVa, VIIa, VIII, Ib, llb, IIIb et IVb de la classification périodique des éléments, à base d'oxyde ou d'oxyhydroxyde de terre rare et, le cas échéant à base d'oxyde ou d'oxyhydroxyde de l'autre élément, et d'anions acetate ou chlorure de la terre rare et, le cas échéant, d'anions du précurseur de l'autre élément, caractérisé en ce qu'il est redispersible dans l'eau pour donner un sol ou une suspension colloïdale, dont la taille des colloïdes est d'au plus 5 nm dans le cas d'un composé à base seulement d'une ou plusieurs terres rares et d'au plus 10 nm dans le cas d'un composé à base d'au moins une terre rare et d'autre élément du type précité, en ce qu'il présente une dispersibilité dans l'eau d'au moins 50% et plus particulièrement d'au moins 60% et une teneur en nitrate d'au plus 1000ppm.

Le procédé revendiqué donne lieu à une suspension colloïdale d'un composé d'une terre rare et éventuellement d'au moins un autre élément choisi dans les groupes IVa, VIIa, VIII, Ib, llb, IIIb et IVb de la classification périodique des éléments, qui est caractérisée en ce que la taille des colloïdes est d'au plus 10 nm, plus particulièrement d'au plus 5nm et en ce que sa teneur en nitrate est d'au plus 1000ppm.

Les composés ou produit selon l'invention offrent une bonne dispersibilité tant dans l'eau ce qui permet d'obtenir des suspensions stables et concentrées, que dans des matériaux supports comme par exemple l'alumine, utilisés dans la fabrication des catalyseurs pour la préparation de "wash coat". En outre, avec cette bonne dispersibilité, ils ont comme caractéristique intéressante le fait de présenter une teneur en nitrate très faible. Ainsi, lors de leur utilisation dans la préparation des catalyseurs, il n'y a pas de dégagement d'oxydes d'azote ( NOx ) pendant l'étape de calcination. Il n'est donc pas nécessaire de prévoir des dispositifs spécifiques pour l'élimination des NOx dans les unités de préparation des catalyseurs.

Par ailleurs, les composés de l'invention, lorsqu'ils sont à base d'au moins deux terres rares ou d'au moins une terre rare et d'un autre élément, sont susceptibles de donner des solutions solides.

D'autres caractéristiques, détails et avantages de l'invention apparaîtront encore plus complètement à la lecture de la description qui va suivre, ainsi que des divers exemples concrets mais non limitatifs destinés à l'illustrer.

Pour l'ensemble de la description il y aura lieu de retenir les définitions suivantes. Par terre rare on entend les éléments du groupe constitué par l'yttrium et les éléments de la classification périodique de numéro atomique compris inclusivement entre 57 et 71. La classification périodique des éléments à laquelle il est fait référence est celle publiée dans le Supplément au Bulletin de la Société Chimique de France n° 1 (janvier 1966)

Le procédé de préparation des composés de l'invention va tout d'abord être décrit.

La première étape du procédé consiste à préparer, sous forme habituellement d'une solution ou suspension, l'élément ou un mélange des éléments qui rentrent dans la composition du composé que l'on cherche à obtenir. Cette solution ou suspension comprend un acétate ou un chlorure de terre rare et éventuellement au moins un sel ou un sol d'un autre élément choisi dans les groupes IVa, VIIa, VIII, Ib, llb, IIIb et IVb de la classification périodique des éléments. Pour la suite de la description de cette première étape et de l'étape suivante de mise en contact avec un milieu basique, on utilisera pour simplifier le terme mélange pour désigner la solution ou suspension de l'élément ou du mélange des éléments qui rentrent dans la composition du composé

En ce qui concerne la terre rare, celle-ci peut être plus particulièrement choisie parmi le cérium, l'yttrium, le néodyme, le gadolinium et le praséodyme. Dans le cas de l'utilisation en catalyse des composés de l'invention, le cérium, l'yttrium et le praséodyme sont préférés.

Pour l'autre élément, on peut mentionner plus particulièrement le zirconium, le fer, le cuivre, le manganèse, le gallium et le palladium.

En ce qui concerne les sels, on utilise de préférence l'acétate pour la ou les terres rares. Pour le ou les autres éléments, on peut mentionner comme sels les chlorures ou les sels d'acides carboxyliques comme les acétates, les oxalates ou les formiates. Lorsque cela est possible, on utilise de préférence un acétate.

L'étape suivante consiste à mettre en contact le mélange précité avec un milieu basique. Par milieu basique on entend tout milieu présentant un pH supérieur à 7. Le milieu basique sera habituellement une solution aqueuse contenant une base. On peut utiliser notamment comme base les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Enfin, dans le cas de la préparation d'un composé à base de cérium et de zirconium utilisant un chlorure de cérium, on utilise tout particulièrement les bases mentionnées ci-dessus, on évite de préférence d'utiliser les carbonates ou hydroxycarbonates.

La mise en contact du mélange précité et du milieu basique se fait dans des conditions telles que le pH du mélange réactionnel que l'on forme ainsi reste basique.

De préférence, cette valeur de pH sera d'au moins 9. Elle pourra être plus particulièrement d'au plus 11. Plus particulièrement encore, cette valeur pourra être comprise entre 9,5 et 11.

La mise en contact du mélange précité et du milieu basique peut se faire par introduction du mélange dans le milieu basique. Il est aussi possible de réaliser la mise en contact en continu, la condition de pH étant réalisée en réglant les débits respectifs du mélange et de milieu basique.

Il est possible, selon une variante particulière de l'invention, de travailler dans des conditions telles que lors de la mise en contact du mélange avec le milieu basique on maintienne constant le pH du milieu réactionnel ainsi formé. De telles conditions peuvent être obtenues en ajoutant lors de l'introduction du mélange dans le milieu basique une quantité supplémentaire de base au mélange formé.

La mise en contact se fait habituellement à température ambiante.

A l'issue de la réaction, on obtient un précipité ou une suspension qui peut être séparé, si nécessaire, du mélange réactionnel par tout moyen connu. Le produit séparé peut être lavé.

Le séchage ultérieur ou, plus généralement la récupération du précipité se fait par un procédé du type atomisation ou lyophilisation.

Selon un mode de réalisation préféré de l'invention la séparation du précipité du mélange réactionnel et son séchage se fait par atomisation. c'est à dire par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions Gerge Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz est comprise entre 400 et 900°C et plus particulièrement entre 600 et 800°C, la température du solide séché entre 110 et 250°C, de préférence entre 125 et 200°C.

En ce qui concerne le réacteur flash mentionné plus haut, on pourra notamment se référer à la figure 1 de la demande de brevet français 2 431 321.

Celui-ci est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure dé la chambre de combustion est munie d'une ouverture permettant l'introduction de la phase combustible.

D'autre part la chambre de combustion comprend un cylindre interne coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, I'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact. La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite le mélange à traiter sous forme de liquide par le tuyau précité. Le liquide est alors fractionné en une multitude de gouttes, chacune d'elle étant transportée par un volume de gaz et soumise à un mouvement créant un effet centrifuge. Habituellement, le débit du liquide est compris entre 0,03 et 10 m/s.

Le rapport entre la quantité de mouvement propre de la phase hélicoïdale et celle du mélange liquide doit être élevé. En particulier il est d'au moins 100 et de préférence compris entre 1000 et 10000. Les quantités de mouvement au niveau du passage réduit sont calculées en fonction des débits d'entrée du gaz et du mélange à traiter, ainsi que de la section dudit passage. Une augmentation des débits entraîne un grossissement de la taille des gouttes.

Dans ces conditions, le mouvement propre des gaz est imposé dans sa direction et son intensité aux gouttes du mélange à traiter, séparées les unes des autres dans la zone de convergence des deux courants. La vitesse du mélange liquide est de plus réduite au minimum nécessaire pour obtenir un flot continu.

On obtient à l'issue de l'étape de séchage et/ou de séparation un composé selon l'invention qui va maintenant être décrit plus précisément.

Dans le cas d'un composé à base de terres rares seulement, ce composé est un produit amorphe à base d'oxyde ou d'oxyhydroxyde de terre rare et d'anions du précurseur de la terre rare. Il peut se présenter sous la forme d'un coeur à base d'au moins un oxyde ou d'un oxyhydroxyde de terre rare ou d'un oxyhydroxychlorure ou d'un oxyhydroxyacétate entouré d'anions du précurseur de la terre rare. Dans le cas d'un composé à base d'une terre rare et d'un autre élément, le composé est aussi à base d'oxyde ou d'oxyhydroxyde de terre rare et de l'autre élément et d'anions des précurseurs. Il peut aussi se présenter sous la forme d'un coeur à base d'au moins un oxyde ou d'un oxyhydroxyde de terre rare ou d'un oxyhydroxychlorure ou d'un oxyhydroxyacétate entouré d'anions du précurseur de la terre rare étant entendu que l'on peut avoir un oxyde ou oxyhydroxyde mixte de la terre rare et de l'autre élément. Par exemple, dans le cas particulier d'un composé à base de cérium et de zirconium préparé à partir d'acétate de cérium, on a un composé présentant un coeur à base d'au moins un oxyde et d'un oxyhydroxyde de cérium et de zirconium entouré d'anions acétate.

En ce qui concerne les proportions respectives des éléments rentrant dans la composition des composés de l'invention, en cas de présence d'au moins une terre rare avec un élément autre qu'une terre rare, la proportion en terre rare est de préférence d'au moins 50% plus particulièrement d'au moins 70% en poids par rapport à l'ensemble des éléments exprimé en oxyde.

Une caractéristique essentielle des composés de l'invention est leur dispersibilité dans l'eau. Cette dispersibilité dans l'eau est d'au moins 50%, plus particulièrement d'au moins 60% et d'au moins 80% dans le cas particulier de l'eau acidulée.

La dispersibilité est le rapport (P1 - P2)/P1 exprimée en %, P1 étant la masse initiale de produit mis en suspension dans l'eau et P2 la masse de précipité résiduel sec obtenu après centrifugation de la suspension préalablement obtenue, séparation des eaux-mères et du précipité et séchage de ce dernier. La dispersibilité dans l'eau acidulée est donnée de la même manière mais à partir d'une suspension dont le pH est de 4.

Une caractéristique intéressante des composés de l'invention est aussi leur faible teneur en nitrate. Cette teneur en poids est d'au plus 1000ppm, plus particulièrement d'au plus 200ppm et encore plus particulièrement d'au plus 100ppm.

Une autre caractéristique des composés de l'invention est leur homogénéité chimique. En effet, les composés à base d'au moins une terre rare et d'au moins un autre élément choisi dans les groupes IVa, VIIa, VIII, Ib, IIb, IIIb et IVb présentent une homogénéité chimique telle que les domaines d'hétérogénéité sont inférieurs à 10nm². Ceci signifie qu'il n'y a pas de différence dans la composition chimique des produits de l'invention entre des zones de surface de 10nm².

Ces caractéristiques d'homogénéité sont déterminées par analyse MET-EDS. Plus particulièrement, le domaine d'hétérogénéité a été mesuré par la méthode de cartographie par spectroscopie à dispersion d'énergie (EDS) en utilisant une microsonde de microscopie électronique à transmission (MET).

La granulométrie des composés de l'invention peut varier en fonction notamment du mode de séchage. Elle peut se situer entre 1 et 10µm. Toutes les tailles données ici et dans la suite de la description sont des tailles moyennes.

Dans le cas plus particulier des composés à base de cérium seul ou à base majoritairement de cérium, la taille des cristallites est d'au plus 4nm. Cette mesure se fait à partir des spectres RX et par analyse MET.

Les produits qui viennent d'être décrits ci-dessus peuvent servir notamment à la préparation de composés à base d'au moins un oxyde de terre rare et, éventuellement d'au moins un autre élément choisi dans les groupes IVa, VIIa, VIII, Ib, IIb, IIIb et IVb de la classification périodique des éléments. Cette préparation se fait par calcination des produits précités à une température suffisante pour obtenir les produits sous forme d'oxydes. La température de calcination peut être également ajustée et/ou choisie en fonction de la température d'utilisation ultérieure réservée au composé selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte n'est bien évidemment pas exclue. Dans la pratique, on limite généralement la température de calcination à un intervalle de valeurs comprises entre 300 et 500°C et plus particulièrement entre 350 et 400°C.

L'intérêt principal des composés de l'invention est leur capacité à donner des sols ou suspensions colloïdales. Ces sols vont maintenant être décrits plus particulièrement.

Ils sont obtenus en redispersant dans l'eau les composés décrits ci-dessus. Pour favoriser la dispersion des composés il peut être avantageux de les disperser dans un milieu aqueux légèrement acidifié notamment avec de l'acide acétique et présentant par exemple un pH d'environ 4. On obtient ainsi des sols dont les principales caractéristiques sont les suivantes.

Ils sont constitués d'oxyde ou d'oxyhydroxyde de terres rares et éventuellement d'au moins un autre élément choisi dans les groupes IVa, VIIa, VIII, Ib, llb, IIIb et IVb. Ils présentent des colloïdes dont la taille est d'au plus 5nm et peut être comprise entre 2 et 5 nm dans le cas des produits à base seulement d'une ou plusieurs terres rares. Dans le cas de produits à base d'au moins une terre rare et d'un autre élément du type précité, la taille des colloïdes est d'au plus 10nm et de préférence d'au plus 5nm. Cette taille des colloïdes est mesurée par microscopie électronique à transmission ( MET ).

Par ailleurs, la teneur en nitrate des sols mesurée par rapport à la masse des colloïdes est d'au plus 1000ppm, plus particulièrement d'au plus 200ppm et encore plus particulièrement d'au plus 100ppm.

En outre, les colloïdes présentent une homogénéité chimique telle que les domaines d'hétérogénéité sont inférieurs à 10nm². Cette homogénéité chimique est mesurée comme précédemment (MET - EDAX).

Une autre caractéristique des sols de l'invention est leur caractère faiblement acide. Ils présentent en effet un pH d'au moins 3 et plus particulièrement compris entre 5 et 8.

Les composés et les sols de l'invention qui viennent d'être décrits peuvent être employés dans la préparation de catalyseurs ou de compositions catalytiques utilisables notamment pour le traitement des gaz d'échappement des moteurs à combustion interne.

On procède alors généralement de la manière suivante. Le sol du composé est mélangé avec un produit formant support. Ce produit peut être par exemple de l'alumine, du titane, de la silice ou de la zircone. Le mélange entre le sol et le produit précité peut se faire par exemple dans un broyeur humide. Des éléments catalytiquement actifs, tels que des métaux précieux peuvent être ajoutés avant ou après le mélange. Le mélange obtenu est ensuite séché et calciné. Cette calcination peut se faire dans les mêmes conditions de température que celles qui ont été décrites plus haut pour la calcination des produits issus de la réaction de précipitation.

A l'issue de cette calcination, on obtient une composition catalytique qui présente plusieurs caractéristiques spécifiques.

Selon un premier mode de réalisation, on a une composition catalytique comprenant au moins un oxyde de terre rare et un support du type précité qui forme une matrice dans laquelle ledit oxyde de terre rare est réparti de façon homogène et se présente sous forme de cristallites d'au plus 12nm. La taille de particule donnée ici s'entend pour une composition obtenue après calcination à 800°C pendant 6 heures au plus sous air.

Selon un second mode de réalisation, on a une composition catalytique comprenant au moins un oxyde de terre rare et au moins un second oxyde choisi dans le groupe des oxydes de terre rare et des oxydes des éléments des groupes IVa, Vlla, VIII, Ib, llb, IIIb et IVb de la classification périodique et un support du type précité formant une matrice et cette composition est caractérisée en ce lesdits oxydes sont répartis d'une manière homogène et juxtaposée dans ledit support.

L'homogénéité de la répartition est mesurée comme précédemment. Plus particulièrement, cette homogénéité du ou des oxydes dans le support est à l'échelle de 10nm².

Le terme juxtaposé utilisé plus haut signifie que dans le cas où la composition comprend plusieurs oxydes, ceux-ci sont présents au sein de la matrice ou support les uns à coté des autres et non pas dispersés d'une manière aléatoire. Par exemple, dans le cas de deux oxydes A et B, pour chaque élément A on trouvera un élément B à son voisinage formant en quelque sorte un couple AB et on n'aura pas une distribution quelconque de A et B dans le support. Cette caractéristique peut s'observer par l'analyse MET-EDS.

Dans le cas du deuxième mode de réalisation mentionné plus haut, c'est à dire pour les compositions catalytiques comprenant au moins un oxyde de terre rare et au moins un oxyde d'un élément du type précité, la taille des cristallites desdits oxydes est d'au plus 15nm et plus particulièrement d'au plus 10nm. La taille de particule donnée ici s'entend encore pour une composition obtenue après calcination à 800°C pendant 6 heures au plus sous air.

Pour l'ensemble des deux modes de réalisations qui viennent d'être décrits ci-dessus, la taille des cristallites est déterminée à partir de la largeur à mi-hauteur I en radian des pics de diffraction X selon la loi de Scherrer Kλ /(√I²-I'²)cos(θ) dans laquelle λ désigne la longueur d'onde du faisceau X (λ_{Cu}=1,5418A°), I' une largeur purement instrumentale égale ici à 0,135°, k est la constante de Scherrer et elle est égale ici à 0,89 en considérant la largeur du pic entre -Δθ et +Δθ. La largeur à mi-hauteur est obtenue par déconvolution du pic (111) selon une loi type pseudo-voigt à l'aide du logiciel Profile Fitting et est estimée correcte pour une erreur relative inférieure à 5%.

En outre, toujours dans le cas de ce deuxième mode, les oxydes sont présents sous la forme d'une solution solide ou majoritairement sous la forme d'une solution solide. La présence de solutions solides peut être mise en évidence par l'analyse RX.

La quantité d'oxyde de terre rare et éventuellement d'un autre oxyde dans la composition catalytique est comprise généralement entre 10 et 40% en poids par rapport à l'ensemble de la composition.

On pourra mentionner que du fait de la répartition homogène des particules de l'oxyde ou des oxydes dans le support, la composition catalytique de l'invention présente une forte capacité de stockage de l'oxygène.

Enfin, l'invention permet la fabrication de catalyseurs, utilisables notamment pour le traitement des gaz d'échappement des moteurs à combustion interne, comportant un substrat et un revêtement. Ce substrat peut être du type métallique, ce peut être aussi un monolithe réfractaire en céramique. Le revêtement peut être préparé par les méthodes classiques de fabrication de "wash-coat" à partir des composés, des suspensions ou des compositions catalytiques qui ont été décrits plus haut.

Des exemples concrets mais non limitatifs vont maintenant être donnés.

Dans ces exemples, la dispersibilité dans l'eau est mesurée de la manière suivante : on introduit 1g de produit sec dans une fiole jaugée de 50ml, on complète en eau à 50ml et on agite pendant 15 minutes. La suspension obtenue est centrifugée à 4500t/mn pendant 10mn. Les eaux-mères sont ensuite séparées du précipité qui est séché à 120°C pendant une nuit. La dispersibilité est donnée par le rapport (P1 - P2)/P1 exprimée en %, P1 étant la masse initiale de 1g et P2 la masse de précipité résiduel sec. La dispersibilité dans l'eau acidulée est déterminée en utilisant le même mode opératoire mais la suspension de 50ml est amenée à pH 4 avec de l'acide acétique concentré.

Enfin, la mesure par diffusion quasi élastique de la lumière permet de prouver la présence de colloïdes dans les eaux-mères.

### EXEMPLE 1

On place 0,5l d'une solution 3,6M de NH₄OH dans un réacteur à température ambiante avec une forte agitation (1600tr/mn). On introduit à l'aide d'un goutte à goutte rapide 0,5l d'une solution 0,6M d'acétate de cérium. Le pH passe de 11,5 à 9,5 dès le début de l'introduction de l'acétate de cérium III. On maintient 30 mn l'agitation après l'introduction de tout l'acétate. La température reste au niveau de la température ambiante. On sépare ensuite le précipité obtenu par filtration sur fritté n°4. Le précipité est ensuite lavé par lavage piston avec 2l d'eau déminéralisée.

Le précipité est séché par lyophilisation en 24h ou par atomisation avec un atomiseur Büchi. Dans ce demier cas, la température de sortie du solide est de 110°C.

L'analyse MET montre que le composé obtenu présente une taille moyenne de cristallites élémentaires de 2,5nm. La teneur en nitrate est de 80ppm.

Le composé présente une dispersibilité dans l'eau de 95%.

Le composé redispersé dans l'eau déminéralisée donne un sol dont le pH est de 5 et dont la taille des colloïdes est de 4nm.

### EXEMPLE 2

Cet exemple concerne la préparation d'un composé cérium - fer dans les proportions respective de 90/10 en poids d'oxyde.

On part d'une solution d'acétate de fer obtenue à partir de nitrate de fer par précipitation à l'ammoniaque à pH 7 puis lavage du précipité et resolubilisation dans l'acide acétique à pH 1,5. On forme un mélange d'acétate de cérium et de fer en solution à 70g/l dans le rapport d'oxydes 90/10. On fait réagir en continu cette dernière solution avec une solution d'ammoniaque 4M. Les débits respectifs de solution et d'ammoniaque sont de 24ml/mn et de 26ml/mn. Le pH du milieu réactionnel est constant et est de 11. Le précipité obtenu est séché avec un atomiseur Büchi dans les mêmes conditions que dans l'exemple 1.

Le produit présente une dispersibilité dans l'eau de 65%.

L'analyse MET-EDS montre une hétérogénéité inférieure à 10nm².

### EXEMPLE 3

Cet exemple concerne la préparation d'un composé cérium / zirconium / fer / praséodyme dans les proportions en poids d'oxyde respectives 82/17,8/0.1/0,1

On prépare deux litres d'une solution de composition suivante :
Acétate de cérium : 191g
Acétate de zirconium : 95,4g
Acétate de praséodyme : 232,2g
Oxyde ferrique : 181,2g
Acide acétique pur : 200ml

On fait réagir en continu avec un débit de 17ml/mn la solution précédente avec une solution d'ammoniaque 5M à un débit de 28,5ml/mn. Le pH de précipitation est constant et est de 11. On sèche avec un atomiseur Büchi toujours dans les mêmes conditions.

Le produit présente une teneur en nitrate de 200ppm et une dispersibilité dans l'eau de 68%. L'analyse MET-EDS du produit montre une hétérogénéité inférieure à 10nm².

Par redispersion dans l'eau on obtient un sol de pH 4 et de taille de colloïdes de 5nm.

### EXEMPLE 4

Cet exemple concerne la préparation d'un composé cérium/lanthane dans les proportions respectives en poids d'oxyde de 80/20.

On prépare une solution comprenant par litre 135,2g d'acétate de cérium et 35,1g d'acétate de lanthane.

On fait réagir cette solution en continu avec un débit de 18ml/mn avec une solution d'ammoniaque 4M au débit de 26ml/mn. On sèche avec un atomiseur Büchi toujours dans les mêmes conditions.

Le composé obtenu présente une teneur en nitrate de 70ppm et une dispersibilité dans l'eau de 60%. L'analyse MET-EDS du produit montre une hétérogénéité inférieure à 10nm².

### EXEMPLE 5

Cet exemple concerne la préparation d'un composé cérium/zirconium/ yttrium dans les rapports respectifs en poids d'oxyde de 74/22/4;

On prépare une solution d'acétates de cérium, de zirconium et d'yttrium dans les proportions nécessaires. Sous agitation de 1500t/mn, on verse dans un réacteur muni de contre-pales la solution d'acétates avec un débit de 17ml/mn. Une solution d'ammoniaque 4M est introduit à raison de 25,7ml/mn. Le précipité est centrifugé puis remis en suspension et enfin séché avec un atomiseur Büchi toujours dans les mêmes conditions.

Le produit obtenu présente une teneur en nitrate de 90ppm et une dispersibilité dans l'eau acidulée de 80%. L'analyse MET-EDS du produit montre une hétérogénéité inférieure à 10nm². Redispersé dans l'eau, le composé donne un sol de taille de colloïdes de 4,5nm.

### EXEMPLE 6

Cet exemple concerne la préparation d'un composé à base de cérium et de manganèse dans les rapports respectifs en poids d'oxyde de 90/10.

On préparé une solution comprenant par litre 19,4g d'acétate de manganèse et 123,9g d'acétate de cérium.

On fait réagir cette solution en continu avec une solution de soude 2M. Les débits respectifs sont de 18 et 26ml/mn Le précipité est centrifugé puis remis en suspension et enfin séché avec un atomiseur Büchi toujours dans les mêmes conditions.

Le composé obtenu présente une teneur en nitrate de 100 ppm et une dispersibilité dans l'eau acidulée de 87%. L'analyse MET-EDS du produit montre une hétérogénéité inférieure à 10nm². Redispersé dans l'eau, le composé donne un sol de taille de colloïdes de 4,5nm.

### EXEMPLE 7

Cet exemple concerne la préparation d'un composé cérium/cuivre dans les proportions respectives en poids d'oxydes de 90/10.

On prépare une solution d'acétates de cérium et de cuivre dans les proportions nécessaires. On fait réagir en continu cette solution avec une solution de soude 2M dans les débits respectifs de 18l/mn et de 26l/mn.

Le composé obtenu est séché avec un atomiseur Büchi toujours dans les mêmes conditions. L'analyse MET-EDS du produit montre une hétérogénéité inférieure à 10nm².

### EXEMPLE 8

Cet exemple concerne un composé cérium/zirconium de proportions respectives en poids d'oxydes 82/18.

On prépare une solution de chlorure de cérium et de zirconyle dans les proportions requises. On fait réagir en continu et sous une agitation de 700tr/mn cette solution avec une solution d'ammoniaque 4M avec les débits respectifs de 20 et 11ml/m. Le pH du milieu réactionnel est constant et est de 10,1. Le précipité obtenu est séché avec un atomiseur Büchi toujours dans les mêmes conditions. Le composé présente une dispersibilité dans l'eau acidulée de 51%. L'analyse MET-EDS du produit montre une hétérogénéité inférieure à 10nm².

### EXEMPLE 9

Cet exemple décrit la préparation d'une composition catalytique obtenue à partir d'un composé selon l'invention.

On forme une bouillie comprenant 30% en poids de solide constitué pour 20% d'oxydes de cérium et de zirconium obtenu par un procédé du même type que celui de l'exemple 4 (dans les proportions respectives d'oxydes de 80/20 et de dispersibilité dans l'eau acidulée de 95%) et de 80% d'alumine Versal 250 murie 6 heures à 700°C et de surface de 190m²/g. La suspension comprend en outre 1% d'acide acétique par rapport au solide. On soumet 3l de cette bouillie à une agitation vigoureuse puis à un broyage humide dans un broyeur à billes. Ce broyeur a un volume d'un litre et il est rempli de 800ml de billes d'alumine de 0,4 à 0,6mm de diamètre et il est alimenté en bouillie à raison de 13l/h. La taille moyenne des particules de la bouillie passe de 10 à 5µm après le broyage.

La bouillie est séchée à l'air à 120°C 12 heures et le produit séché est calciné à 1050°C sous air 6 heures.

La taille des cristallites des oxydes dans l'alumine est de 11nm. L'analyse RX montre que le cérium et le zirconium sont présents sous forme d'une solution solide de zirconium dans le cérium.

## Revendications

1. Composé d'au moins une terre rare et éventuellement d'au moins un autre élément choisi dans les groupes IVa, Vlla, VIII, Ib, llb, IIIb et IVb de la classification périodique des éléments, à base d'oxyde ou d'oxyhydroxyde de terre rare et, le cas échéant, à base d'oxyde ou d'oxyhydroxyde de l'autre élément, et d'anions acétates ou chlorures de terre rare, **caractérisé en ce qu'**il est redispersible dans l'eau pour donner un sol ou une suspension colloïdale dont la taille des colloïdes est d'au plus 5nm dans le cas d'un composé à base seulement d'une ou plusieurs terres rares et d'au plus 10nm dans le cas d'un composé à base d'au moins une terre rare et d'un autre élément du type précité, et **en ce qu'**il présente une dispersibilité dans l'eau d'au moins 50% et plus particulièrement d'au moins 60% et une teneur en nitrate d'au plus 1000ppm.

2. Composé selon la revendication 1, **caractérisé en ce qu'**il présente une teneur en nitrate d'au plus 200ppm et plus particulièrement d'au plus 100ppm.

3. Composé selon la revendication 1 ou 2, à base d'au moins une terre rare et d'au moins un autre élément précité, **caractérisé en ce qu'**il présente une homogénéité chimique telle que les domaines d'hétérogénéité sont inférieurs à 10nm².

4. Composé selon l'une des revendications précédentes, **caractérisé en ce que** la terre rare est choisie parmi le cérium, l'yttrium, le néodyme, le gadolinium et le praséodyme.

5. Composé selon l'une des revendications précédentes, **caractérisé en ce que** l'autre élément est choisi parmi le zirconium, le fer, le cuivre, le gallium, le palladium et le manganèse.

6. Procédé de préparation d'un composé selon l'une des revendications précédentes à base d'au moins une terre rare, **caractérisé en ce qu'**il comprend les étapes suivantes :
- on prépare une solution comprenant au moins un acétate ou un chlorure de terre rare;
- on met en contact la solution avec un milieu basique et on maintient le mélange réactionnel ainsi formé à un pH basique;
- on récupère le précipité formé par atomisation ou lyophilisation.

7. Procédé de préparation d'un composé selon l'une des revendications 1 à 5, à base d'au moins une terre rare et d'au moins un autre élément précité, **caractérisé en ce qu'**on prépare un mélange comprenant au moins un acétate ou chlorure de ladite terre rare et au moins un sel ou un sol dudit élément;
- on met en contact le mélange précité avec un milieu basique et on maintient le milieu réactionnel ainsi formé à un pH basique;
- on récupère le précipité formé par atomisation ou lyophilisation.

8. Procédé selon l'une des revendications 6 ou 7, **caractérisé en ce qu'**on maintient constant le pH du milieu réactionnel lors de la mise en contact de la solution ou du mélange précité et du milieu basique.

9. Procédé selon l'une des revendications 6 à 8, **caractérisé en ce qu'**on réalise la mise en contact précitée en introduisant la solution ou le mélange précité dans le milieu basique.

10. Procédé selon l'une des revendications 6 à 9, **caractérisé en ce qu'**on utilise comme milieu basique une solution d'ammoniaque.

11. Procédé selon l'une des revendications 6 à 10, **caractérisé en ce qu'**on maintient le pH du mélange réactionnel à une valeur d'au moins 9 et plus particulièrement comprise entre 9,5 et 11.

12. Procédé de préparation d'une suspension colloïdale d'un composé d'au moins une terre rare et éventuellement d'au moins un autre élément choisi dans les groupes IVa, VIIa, VIII, Ib, IIb, IIIb et IVb de la classification périodique des éléments, **caractérisé en ce qu'**on met en suspension dans l'eau un composé selon l'une des revendications 1 à 5.

## Patentansprüche

1. Verbindung von wenigstens einem Seltenerdelement und gegebenenfalls wenigstens einem anderen Element, das ausgewählt ist aus den Gruppen IVa, VIIa, VIII, Ib, IIb, IIIb und IVb des Periodensystems der Elemente, auf der Basis des Oxids oder Oxyhydroxids des Seltenerdelements, und gegebenenfalls auf der Basis des Oxids oder Oxyhydroxids des anderen Elements, und der Acetat- oder Chloridanionen des Seltenerdelements, **dadurch gekennzeichnet, dass** diese in Wasser redispergierbar ist, um ein Gel oder eine kolloidale Suspension zu ergeben, bei welcher die Größe der Kolloide im Fall einer Verbindung auf der Basis von nur einem oder mehreren Seltenerdelementen höchstens 5 nm beträgt und in dem Fall einer Verbindung auf der Basis von wenigstens einem Seltenerdelement und einem anderen Element des vorher angegebenen Typs höchstens 10 nm beträgt, und dadurch dass diese eine Dispergierbarkeit in Wasser von wenigstens 50 % und insbesondere wenigstens 60 % und einen Nitratgehalt von höchstens 1.000 ppm aufweist.

2. Verbindung nach Anspruch 1, **dadurch gekennzeichnet, dass** diese einen Nitratgehalt von höchstens 200 ppm und insbesondere höchstens 100 ppm aufweist.

3. Verbindung nach Anspruch 1 oder 2, auf der Basis wenigstens eines Seltenerdelements und wenigstens eines anderen oben genannten Elements, **dadurch gekennzeichnet, dass** diese eine derartige chemische Homogenität aufweist, dass die Heterogenitätsbereiche kleiner als 10 nm² sind.

4. Verbindung nach einem der vorhergehenden Ansprüche, **dadurch gekennzeichnet, dass** das Seltenerdelement ausgewählt ist aus Cer, Yttrium, Neodym, Gadolinium und Praseodym.

5. Verbindung nach einem der vorhergehenden Ansprüche, **dadurch gekennzeichnet, dass** das andere Element ausgewählt ist aus Zirkonium, Eisen, Kupfer, Gallium, Palladium und Mangan.

6. Verfahren zur Herstellung einer Verbindung nach einem der vorhergehenden Ansprüche auf der Basis wenigstens eines Seltenerdelements, **dadurch gekennzeichnet, dass** dieses die folgenden Schritte umfasst:
- man stellt eine Lösung her, welche wenigstens ein Acetat oder ein Chlorid des Seltenerdelements umfasst;
- man bringt die Lösung mit einem basischen Medium in Kontakt und man hält die so gebildete Reaktionsmischung bei einem basischen pH;
- man gewinnt den gebildeten Niederschlag durch Atomisierung oder Lyophilisierung.

7. Verfahren zur Herstellung einer Verbindung nach einem der Ansprüche 1 bis 5 auf der Basis wenigstens eines Seltenerdelements und wenigstens eines anderen oben genannten Elements, **dadurch gekennzeichnet, dass** man eine Mischung herstellt, welche wenigstens ein Acetat oder Chlorid des genannten Seltenerdelements und wenigstens ein Salz oder ein Sol des genannten Elements umfasst;
- man die obengenannte Mischung mit einem basischen Medium in Kontakt bringt und man das so gebildete Reaktionsmedium bei einem basischen pH hält;
- man den gebildeten Niederschlag durch Atomisierung oder Lyophilisierung gewinnt.

8. Verfahren nach einem der Ansprüche 6 oder 7, **dadurch gekennzeichnet, dass** man den pH des Reaktionsmediums konstant hält, wenn man die Lösung oder die obengenannte Mischung und das basische Medium in Kontakt bringt.

9. Verfahren nach einem der Ansprüche 6 bis 8, **dadurch gekennzeichnet, dass** man das obengenannte Inkontaktbringen dadurch bewirkt, dass man die Lösung oder die obengenannte Mischung in das basische Medium einführt.

10. Verfahren nach einem der Ansprüche 6 bis 9, **dadurch gekennzeichnet, dass** man als basisches Medium eine Ammoniaklösung verwendet.

11. Verfahren nach einem der Ansprüche 6 bis 10, **dadurch gekennzeichnet, dass** man den pH der Reaktionsmischung bei einem Wert von wenigstens 9 und insbesondere einem, der zwischen 9,5 und 11 liegt, hält.

12. Verfahren zur Herstellung einer kolloidalen Suspension einer Verbindung wenigstens eines Seltenerdelements und gegebenenfalls wenigstens eines anderen Elements, das ausgewählt ist aus den Gruppen IVa, VIIa, VIII, Ib, IIb, IIIb und IVb des Periodensystems der Elemente, **dadurch gekennzeichnet, dass** man eine Verbindung nach einem der Ansprüche 1 bis 5 in Wasser suspendiert.

## Claims

1. A compound of at least one rare earth and optionally at least one other element selected from groups IVa, VIIa, VIII, Ib, IIb, IIIb and IVb of the periodic table of elements, based on a rare earth oxide or hydroxide and if appropriate based on an oxide or hydroxide of the other element, and rare earth acetates or chlorides anions, **characterised in that** it is redispersable in water to give a sol or a colloidal suspension in which the size of the colloids is at most 5nm in the case of a compound based solely on one or more rare earths and at most 10nm in the case of a compound based on at least one rare earth and another element of the above-mentioned type, and that it has a dispersability in water of at least 50% and more particularly at least 60% and a nitrate content of at most 1000ppm.

2. A compound according to claim 1 **characterised in that** it has a nitrate content of at most 200ppm and more particularly at most 100ppm.

3. A compound according to claim 1 or claim 2 based on at least one rare earth and at least one other said element, **characterised in that** it has a chemical homogeneity such that the heterogeneity domains are smaller than 10nm².

4. A compound according to one of the preceding claims **characterised in that** the rare earth is selected from cerium, yttrium, neodymium, gadolinium and praseodymium.

5. A compound according to one of the preceding claims **characterised in that** the other element is selected from zirconium, iron, copper, gallium, palladium and manganese.

6. A process for the preparation of a compound according to one of the preceding claims based on at least one rare earth, **characterised in that** it comprises the following steps:
- preparing a solution comprising at least one rare earth acetate or chloride;
- bringing the solution into contact with a basic medium and maintaining the reaction mixture formed **in that** way at a basic pH value; and
- recovering the precipitate formed by atomisation or lyophilisation.

7. A process for the preparation of a compound according to one of claims 1 to 5 based on at least one rare earth and at least one other said element, **characterised by** preparing a mixture comprising at least one rare earth acetate or chloride and at least one salt or a sol of said element;
- bringing the mixture into contact with a basic medium and maintaining the reaction medium formed in that way at a basic pH value; and
- recovering the precipitate formed by atomisation or lyophilisation.

8. A process according to one of claims 6 and 7 **characterised by** maintaining the pH value of the reaction medium constant in the operation of bringing into contact the above-mentioned solution or mixture and the basic medium.

9. A process according to one of claims 6 to 8 **characterised by** effecting said contacting operation by introducing said solution or mixture into the basic medium.

10. A process according to one of claims 6 to 9 **characterised by** using an ammonia solution as the basic medium.

11. A process according to one of claims 6 to 10 **characterised by** maintaining the pH value of the reaction mixture at a value of at least 9 and more particularly between 9.5 and 11.

12. A process for the preparation of a colloidal suspension of a compound of at least one rare earth and optionally at least one other element selected from groups IVa, VIIa, VIII, Ib, IIb, IIIb and IVb of the periodic table of elements, **characterised by** putting into suspension in water a compound according to one of claims 1 to 5.
